# EUROPEAN PATENT SPECIFICATION

(11) **EP 3 979 886 B1**
(45) Date of publication and mention of the grant of the patent: **07.12.2022**
(21) Application number: 21707145.5
(22) Date of filing: 28.01.2021
(51) Int. Cl.: A47K 3/28, E03C 1/04

(54) **THERMOSTATICALLY WRAPPED PRESS-TYPE PHOTOSENSITIVE SPRAY SHOWER**
THERMOSTATISCH GEWICKELTE LICHTEMPFINDLICHE SPRÜHDUSCHE VOM DRUCKTYP
DOUCHE DE PULVÉRISATION PHOTOSENSIBLE DE TYPE À PRESSAGE À ENVELOPPE THERMOSTATIQUE

(30) Priority: 28.08.2020 CN 202010893036; 28.08.2020 CN 202021853760 U
(43) Date of publication of application: 13.04.2022
(73) Proprietor: Guangzhou Seagull Kitchen And Bath Products Co., Ltd., Guangzhou, Guangdong 511400 (CN)
(72) Inventor: PENG, Jacky, Guangzhou, Guangdong 510627 (CN); ZHANG, Mingzi, Jiangmen, Guangdong 529400 (CN); LUO, Tao, Xianning, Hubei 437402 (CN); WEI, Aizhao, Kaifeng, Henan 475318 (CN)
(74) Representative: Bandpay & Greuter
(86) International application number: PCT/CN2021/074262
(87) International publication number: WO 2022/041652

(56) References cited:
- JP-A- 2006 349 325
- US-A1- 2002 040 500

## Description

### TECHNICAL FIELD

The present invention relates to the field of bathroom devices, and is directed towards a thermostatically wrapped press-type photosensitive spray shower

### BACKGROUND

With the development of society and the progress of the era, people have higher and higher requirements for life. Shower is favored by the public because of its advantages of convenience, easy operation and space-saving. However, the existing shower only includes a handheld shower, and water from the handheld shower can only be sprayed to a local part of a human body. It is difficult to spray the human body comprehensively by the handheld shower, which affects the experience feeling and comfort sense of users when taking a shower. In addition, a water outlet mechanism of the existing shower mostly adopts a pressing switch or touch-sensitive switch. However, the pressing switch alone has the problem that a pressing force is too low or too high during pressing, which causes poor user experience feeling. The touch-sensitive switch alone has the problem that the water outlet mechanism cannot work when the battery power supply is insufficient or the circuit fails. JP 2006349325A discloses a hot-water supply unit which allows freely the switching between the mist mode for spouting hot water mistlikely, and the another hot-water supply mode for spouting the hot water with a water flow different from the mist, and selects anyone mode out of the plurality of kinds of hot-water supply modes including the mist mode, by switching of a switching means. US 2002040500A1 discloses a water shower apparatus which comprises a cold air intercepting screen formed around the shower bather, and the cold air intercepting screen has warming effects.

### SUMMARY

An object of the present invention is to solve at least above problems, and to provide, at least, the advantages that will be described later.

Another object of the present invention is to provide a thermostatically wrapped press-type photosensitive spray shower according to claim 1, which is provided with a pair of side arms capable of spraying, which can be used to spray a human body comprehensively by cooperating with a handheld shower, and improves the experience feeling and comfort sense of users when taking a shower. In addition, the spray shower is also provided with a mechanical pressing and touch dual-mode switch of a water outlet mechanism, which can improve user experience feeling and can still ensure the normal operation of the water outlet mechanism by mechanically pressing the switch when the touch ensuring the normal use of the spray shower.

In view of objects mentioned above and other advantages, the present invention provides a thermostatically wrapped press-type photosensitive spray shower, wherein the spray shower comprises:
a fixing base, which is arranged on a wall;
a handheld shower, which is hung on the wall;
a pair of side arms, which are respectively arranged on both sides of the fixing base, wherein, one end of each of the pair of side arms is connected with the fixing base, an end face of the other end is sealed; the pair of side arms are hollow structures, and two opposite sides of the pair of side arms are provided with a plurality of spray nozzles at intervals;
a water conduit system, which is integrated in the fixing base, and comprises a main conduit and two first branches; wherein, one end of the main conduit is in communication with a water supply pipe, the other end of the main conduit is in communication with one end of each of the two first branches, the other end of one of the two first branches is in communication with the handheld shower, the other end of the other of the two first branches is in communication with inside of the pair of side arms, two water conduit branches are provided between two ends of each of the two first branches, one of the two water conduit branches is equipped with a manual pressing valve for turning on and off the one of the two water conduit branches, the other of the two water conduit branches is equipped with a solenoid valve for turning on and off the other of the two water conduit branches, the solenoid valve is connected to a touch switch, and the touch switch is assembled on a pressing panel of the manual pressing valve corresponding to the touch switch.

Preferably, in the thermostatically wrapped press-type photosensitive spray shower, the touch switch is a photosensitive touch switch and comprises a touch screen whose central part is provided with a light transmission area, a photosensitive sensor, and a controller connected with the photosensitive sensor; wherein, a central part of the pressing panel is provided with an opening, the touch screen is assembled in the opening corresponding to the touch screen, the photosensitive sensor is assembled on an inner side of the pressing panel, the light transmission area and the photosensitive sensor are arranged corresponding to a direction along a pressing path of the pressing panel, and the controller is connected with the solenoid valve corresponding to the controller.

Preferably, in the thermostatically wrapped press-type photosensitive spray shower, an outer surface of the touch screen is recessed inward.

Preferably, in the thermostatically wrapped press-type photosensitive spray shower, the water conduit system further comprises a second branch for anti-freezing and draining, wherein, one end of the second branch is in communication with the other end of the main conduit, the other end of the second branch is in communication with a drain-pipe, and the second branch is provided with a manual rotary valve for turning on and off the second branch.

In the thermostatically wrapped press-type photosensitive spray shower, one end of the water supply pipe is in communication with one end of the main conduit, the other end of the water supply pipe is preferably in communication with a hot water inlet and cold water inlet through a thermostatic cartridge, and the thermostatic cartridge is used for adjusting the amount of hot water and cold water discharged from the hot water inlet and the cold water inlet, mixing the hot water and cold water and transporting the hot water and cold water to the main conduit.

In the thermostatically wrapped press-type photosensitive spray shower, one end of each of the pair of side arms is preferably rotatably connected with the fixing base, and the other end of each of the pair of side arms is inclined and bent toward a side where the spray nozzles are located.

Preferably, in the thermostatically wrapped press-type photosensitive spray shower, a spray head is provided inside of each of the spray nozzles, a water guide block with a cylindrical structure whose axis extends along a spray path is correspondingly provided inside of an water outlet of the spray head, an outer wall of the water guide block is provided with a spiral groove extending along an axial direction of the water guide block, the spiral groove and an inner wall of the spray head form a spiral water outlet channel, a central part of the spiral water outlet channel is provided with a through hole with a cylindrical structure extending along an axis of the spiral water outlet channel, a central part of the through hole is provided with a stopper perpendicular to the axis of the water guide block, and a central part of the stopper is provided with a water outlet hole.

Preferably, in the thermostatically wrapped press-type photosensitive spray shower, the spray shower further comprises a seat unit which comprises a back plate fixed on the wall and a folding plate hinged to the back plate; wherein, the back plate is located below the fixing base, and the folding plate comprises a first plate body whose one end is hinged to an external surface of the back plate, and a second plate body whose one end is hinged to the other end of the first plate body;
when the folding plate is opened, the first plate body rotating to a horizontal state relative to the back plate, and the second plate body rotating to a vertical state and the bottom of the second plate body is in contact with the ground; when the folding plate is folded up, both the first plate body and the second plate body rotating to a vertical state relative to the back plate, the first plate body and the second plate body overlapping each other, and the first plate body being in close contact with the external surface of the back plate.

Preferably, in the thermostatically wrapped press-type photosensitive spray shower, two safety handrails are symmetrically provided on both sides of the back plate, and each of the two safety handrails is hinged with a side of the back plate.

Preferably, in the thermostatically wrapped press-type photosensitive spray shower, the external surface of the back plate is provided with a plurality of spherical protrusions at intervals.

The present invention comprises at least the following substantial improvements and beneficial effects:
1. The present invention is provided with a pair of side arms capable of spraying, which can be used to spray a human body comprehensively by cooperating with a handheld shower, and improves the experience feeling and comfort sense of users when taking a shower. In addition, the spray shower is also provided with a mechanical pressing and touch dual-mode switch of a water outlet mechanism, which can improve user experience feeling and can still ensure the normal operation of the water outlet mechanism by mechanically pressing the switch when the touch mode fails, thereby ensuring the normal use of the spray shower.
2. The touch sensitivity of the touch screen is set to be effective when touching the surface of the light transmission area, that is, the solenoid valve will be turned on or off when touching the light transmission area by hand. When a hand touches the touch screen, light in the photosensitive area is blocked, the photosensitive sensor receives a signal of the light change, then the signal is transmitted to the controller, and the controller controls turning on and off the solenoid valve, thereby realizing the control of turning on and off of the other water branch by the touch switch. The touch switch is assembled on the pressing panel, the pressing panel can be set on a side of the fixing base away from the wall, and the touch switch or the pressing switch can be turned on or off by touching or pressing the same position. The integrated design saves space and simplifies the pressing operation.
3. A triple helix water guide block is provided inside of a water outlet of the spray head, water flow in a triple helix water outlet channel can form a high-speed rotating jet channel. A stopper is provided at the central part of the cylindrical through hole, and a water outlet hole is provided in the central part of the stopper to form a central direct-jet hole which enables the water molecules to collide around to form a water mist effect and improve shower effect by cooperating with high-speed rotating water flows from three water outlet channels.

Other advantages, objects, and features of the present invention will be showed in part through following description, and in part will be understood by those skilled in the art from study and practice of the present invention.

### BRIEF DESCRIPTION OF THE DRAWINGS

Fig. 1 is a structural view of the thermostatically wrapped press-type photosensitive spray shower according to the present invention.
Fig. 2 is a structural view of the thermostatically wrapped press-type photosensitive spray shower when the pair of side arms are extended according to the present invention.
Fig. 3 is a structural view of the thermostatically wrapped press-type photosensitive spray shower when the pair of side arms are retracted according to the present invention.
Fig. 4 is a sectional view of the side arms according to the present invention.
Fig. 5 is a partial enlarged view of A in Fig. 4.

Reference signs: 1: a fixing base; 2: a handheld shower; 3: a pair of side arms; 31: a spray nozzle; 311: water guide block; 4: pressing panel; 5: a switch of a thermostatic cartridge; 61: a back plate; 611: a safety handrail; 62: a first plate body; 63: a second plate body.

### DETAILED DESCRIPTION

The present invention will now be described in further detail with reference to the accompanying drawings and embodiments in order to enable person skilled in the art to practice with reference to the specification.

It should be noted that terms such as "having", "including" and "comprising" as used herein do not exclude presence or addition of one or more other elements or combinations thereof.

It should be noted that the experimental methods described in the following embodiments are all conventional methods unless otherwise specified, and the reagents and materials are commercially available unless otherwise specified.

It should be noted that in the description of the present invention, the terms indicating orientations or positional relationships such as "transverse ", "longitudinal ", "up", "down", "front", "behind", "left", "right", "vertical", "horizontal", "top", "bottom", "inner", "outer" and the like are based on the orientation or positional relationships shown in the drawings for convenience of describing the present invention and simplifying description. It is not intended or implied that the device or element must have a particular orientation and be constructed and operated in a particular orientation, and therefore it should not be construed as limiting the present invention.

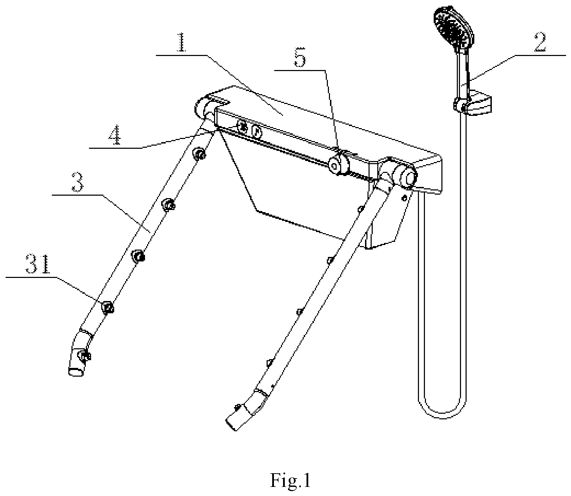

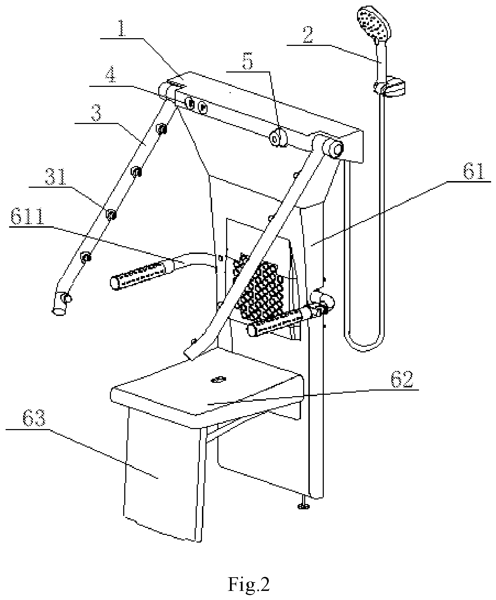

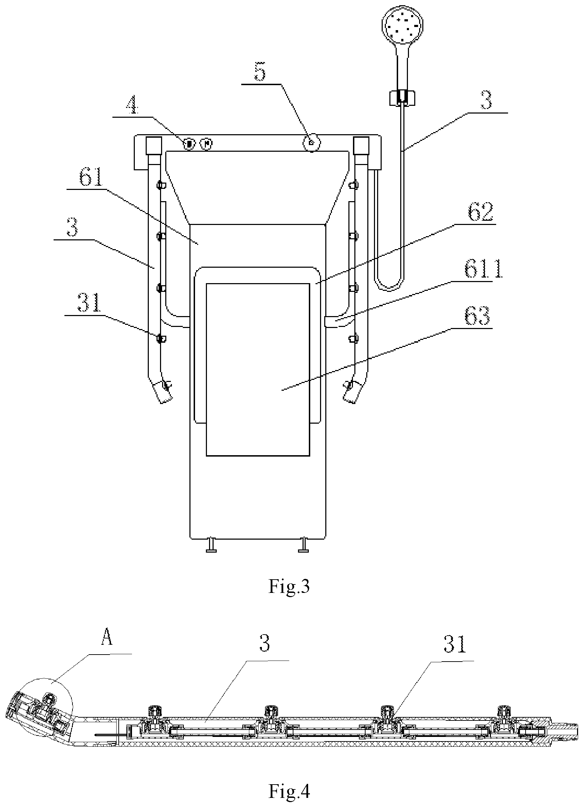

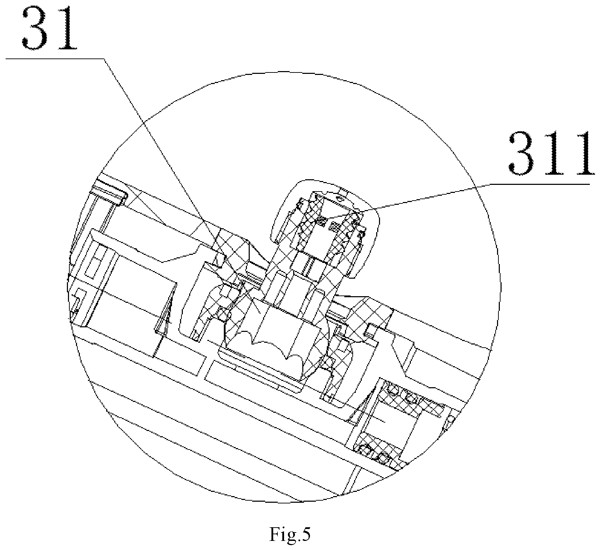

As shown in Fig. 1-Fig. 5, the present invention provides a thermostatically wrapped press-type photosensitive spray shower, including:
a fixing base 1, which is arranged on a wall;
a handheld shower 2, which is hung on the wall;
a pair of side arms 3, which are respectively arranged on both sides of the fixing base 1, wherein, one end of each of the pair of side arms 3 is connected with the fixing base 1, an end face of the other end is sealed, the pair of side arms 3 are hollow structures, and two opposite sides of the pair of side arms 3 are provided with a plurality of spray nozzles 31 at intervals;
a water conduit system, which is integrated in the fixing base 1, and includes a main conduit and two first branches; wherein, one end of the main conduit is in communication with a water supply pipe, the other end of the main conduit is in communication with one end of each of the two first branches, the other end of one of the two first branches is in communication with the handheld shower 2, the other end of the other of the two first branches is in communication with inside of the pair of side arms 3, two water conduit branches are provided between two ends of each of the two first branches, one of the two water conduit branches is equipped with a manual pressing valve for turning on and off the one of the two water conduit branches, the other of the two water conduit branches is equipped with a solenoid valve for turning on and off the other of the two water conduit branches, the solenoid valve is connected to a touch switch, and the touch switch is assembled on a pressing panel 4 of the manual pressing valve corresponding to the touch switch.

In the above technical solution, the present invention is provided with a pair of side arms 3 capable of spraying, which can be used to spray a human body comprehensively by cooperating with a handheld shower 2, and improves the experience feeling and comfort sense of users when taking a shower. In addition, the spray shower is also provided with a mechanical pressing and touch dual-mode switch of a water outlet mechanism, which can improve user experience feeling and can still ensure the normal operation of the water outlet mechanism by mechanically pressing the switch when the touch mode fails, thereby ensuring the normal use of the spray shower.

In the use of the thermostatically wrapped press-type photosensitive spray shower, the handheld shower 2 can be used to spray water from the top of the head, and the pair of side arms 3 can be used to spray water mist from both sides of a human body, so that the human body can be surrounded by hot water circumferentially, thereby providing a relaxed, warm and comfortable full-body shower for the user. In a practical application, a seat can be set in the shower position according to practical need, which can satisfy user's sitting shower and further improve the comfort sense of the spray shower. The present invention provides two first branches which are used for connecting the handheld shower 2 and the pair of side arms 3 with the main conduit, respectively, and the two first branches are turned on and off by the control of the manual pressing valve and the solenoid valve. When the battery power supply of the solenoid valve is sufficient and the circuit is normal, the solenoid valve can be turned on by touching the touch switch by hand, and the other of the two water conduit branches is in communication with water, so as to realize communication of the two first branches with water (shower state). The solenoid valve can be turned off by touching the touch switch again, and the other of the two water conduit branches is turned off (not in communication with water), so as to realize no communication of the two first branches with water (no shower state). When the battery power supply of the solenoid valve is insufficient or the circuit is abnormal, the manual pressing mode can be adopted, the manual pressing valve is turned on and off to realize turning on and off of one of the two water conduit branches, so as to realize communication and no communication of the two first branches with water. That is, the manual pressing valve is used as an emergency means to ensure the normal use of the spray shower when the solenoid valve fails due to power shortage or circuit failure.

In another technical solution, in the thermostatically wrapped press-type photosensitive spray shower, the touch switch is a photosensitive touch switch and includes a touch screen whose central part is provided with a light transmission area, a photosensitive sensor, and a controller connected with the photosensitive sensor, a central part of the pressing panel 4 is provided with an opening, the touch screen is assembled in the opening corresponding to the touch screen, the photosensitive sensor is assembled on an inner side of the pressing panel 4, the light transmission area and the photosensitive sensor are arranged corresponding to a direction along a pressing path of the pressing panel 4, and the controller is connected to the solenoid valve corresponding to the controller.

In the above technical solution, the touch sensitivity of the touch screen is set to be effective when touching the surface of the light transmission area, that is, the solenoid valve will be turned on or off when touching the light transmission area by hand. When a hand touches the touch screen, light in the photosensitive area is blocked, the photosensitive sensor receives a signal of the light change, then the signal is transmitted to the controller, and the controller controls turning on and off the solenoid valve, thereby realizing the control of turning on and off of the other water branch by the touch switch.

The touch switch is assembled on the pressing panel 4, the pressing panel 4 can be set on a side of the fixing base 1 away from the wall, and the touch switch or the pressing switch can be turned on or off by touching or pressing the same position. The integrated design saves space and simplifies the pressing operation.

In another technical solution, in the thermostatically wrapped press-type photosensitive spray shower, an outer surface of the touch screen is recessed inward. The inwardly recessed structural design can avoid false triggering caused by a false touch of the touch screen by a body or a cover (such as a false touch by an arm or other parts when taking a shower).

In another technical solution, in the thermostatically wrapped press-type photosensitive spray shower, the water conduit system further includes a second branch for anti-freezing and draining, wherein, one end of the second branch is in communication with the other end of the main conduit, the other end of the second branch is in communication with a drain-pipe, and the second branch is provided with a manual rotary valve for turning on and off the second branch. In the winter, when the temperature is low, the second branch can be turned on by turning the manual rotary valve to prevent the internal of the water conduit system from freezing, which will cause the spray shower to be unusable.

In another technical solution, in the thermostatically wrapped press-type photosensitive spray shower, one end of the water supply pipe is in communication with one end of the main conduit, the other end of the water supply pipe is in communication with a hot water inlet and cold water inlet through a thermostatic cartridge, and the thermostatic cartridge is used for adjusting the amount of hot water and cold water discharged from the hot water inlet and the cold water inlet, mixing the hot water and cold water and transporting the hot water and cold water to the main conduit. The thermostatic cartridge is used for adjusting water temperature and further improving the experience feeling and comfort sense of the shower. A switch 5 of the thermostatic cartridge is arranged on a side surface of the fixing seat 1 away from the wall.

In another technical solution, in the thermostatically wrapped press-type photosensitive spray shower, one end of each of the pair of side arms 3 is rotatably connected with the fixing base 1. The design of the rotating connection can realize the self-adjustment of the position of the pair of side arms 3, and can also rotate the pair of side arms 3 to a vertical state for storage when the pair of side arms 3 are not needed, which improves the flexibility of the spray shower.

In another technical solution, in the thermostatically wrapped press-type photosensitive spray shower, a spray head is provided inside of each of the spray nozzles 31, a water guide block 311 with a cylindrical structure whose axis extends along a spray path is correspondingly provided inside of an water outlet of the spray head, an outer wall of the water guide block 311 is provided with three spiral grooves extending along an axial direction of the water guide block, each of the three spiral groove and an inner wall of the spray head form a spiral water outlet channel, a central part of the spiral water outlet channel is provided with a through hole with a cylindrical structure extending along an axis of the spiral water outlet channel, a central part of the through hole is provided with a stopper perpendicular to the axis of the water guide block 311, and a central part of the stopper is provided with a water outlet hole. The water guide block 311 with a triple helix structure is provided inside of a water outlet of the spray head, water flow in the spiral water outlet channel with a triple helix structure can form a high-speed rotating jet channel. The stopper is provided at the central part of the through hole with a cylindrical structure, and the water outlet hole is provided in the central part of the stopper to form a central direct-jet hole which enables the water molecules to collide around to form a water mist effect and improve shower effect by cooperating with high-speed rotating water flows from three spiral water outlet channels.

In another technical solution, the thermostatically wrapped press-type photosensitive spray shower further includes a seat unit which includes a back plate 61 fixed on the wall and a folding plate hinged to the back plate 61; wherein, the back plate 61 is located below the fixing base 1, and the folding plate includes a first plate body 62 whose one end is hinged to an external surface of the back plate 61, and a second plate body 63 whose one end is hinged to the other end of the first plate body 62.

When the folding plate is opened, the first plate body 62 rotates to a horizontal state relative to the back plate 61, the second plate body 63 rotates to a vertical state, and the bottom of the second plate body 63 is in contact with the ground. When the folding plate is folded up, both the first plate body 62 and the second plate body 63 rotate to a vertical state relative to the back plate 61, the first plate body 62 and the second plate body 63 overlap each other, and the first plate body 62 is in close contact with the external surface of the back plate 61.

In the above technical solution, the seat unit is arranged below the fixing seat 1, and the seat unit is set to be foldable. When a sitting shower is required, the folding plate can be opened. The first plate body 62 and the second plate body 63 form a L-shaped structure, the first plate body 62 is used as a seat plate, and the second plate body 63 is used as a support plate for supporting the seat plate. The user can sit on the upper surface of the first plate body 62 and take a shower. In a practical application, a plurality of draining holes are provided on the first plate body 62 to facilitate the rapid discharge of the water on the first plate body 62. When a sitting shower is not required, the folding plate can be folded, the first plate body 62 and the second plate body 63 can be rotated to a vertical folding state, and the first plate body 62 and the second plate body 63 are housed on the external surface of the back plate 61, which do not affect a standing shower. The present invention has a simple structure, high use flexibility, and high practicability.

In another technical solution, in the thermostatically wrapped press-type photosensitive spray shower, two safety handrails 611 are symmetrically provided on both sides of the back plate 61, one end of each of the two safety handrails 611 is hinged with a side of the back plate 61, the other end of each of the two safety handrails 611 is inclined and bent toward a direction where the spray nozzles 31 are located. The two safety handrails 611 are arranged on both sides of the back plate 61 to provide a place for placing arms in the sitting shower, so as to avoid lifting arms for a long time and save physical strength and provide a safer, more reliable and comfortable shower mode for the elderly, children or other users have difficulty in moving. The other end of each of the pair of side arms 3 are inclined and bent towards a direction close to each other, which can better surround the human body circumferentially.

In another technical solution, in the thermostatically wrapped press-type photosensitive spray shower, the external surface of the back plate 61 is provided with a plurality of spherical protrusions at intervals. Each of the plurality of spherical protrusions is made of ASA material, which is equivalent to setting a plurality of massage balls on the back plate 61. When a user adopts sitting shower, his back can be attached to the massage balls, so that he can enjoy back massage while taking a sitting shower, and improve the comfort sense of shower.

The number of devices and processing scale described here are used to simplify the description of the present invention. The application, modification and changes of the present invention will be obvious to those skilled in the art.

Although the embodiments of the present invention have been disclosed above, they are not limited to the application previously mentioned in the specification and embodiments, and can be applied in various fields suitable for the present invention. The present invention is not limited to the specific details and the illustrations shown and described here.

For those skilled in the art, additional modifications can be easily implemented, so without departing from the scope defined by the appended claims.

## Claims

1. A thermostatically wrapped press-type photosensitive spray shower, comprising a fixing base (1), which is arranged on a wall;
a handheld shower (2), which is hung on the wall;
a pair of side arms (3), which are respectively arranged on both sides of the fixing base (1), wherein, one end of each of the pair of side arms (3) is connected with the fixing base (1), an end face of the other end is sealed;
the pair of side arms (3) are hollow structures, and two opposite sides of the pair of side arms (3) are provided with a plurality of spray nozzles (31) at intervals;
wherein the spray shower also comprises:
a water conduit system, which is integrated in the fixing base (1), and comprises a main conduit and two first branches;
wherein, one end of the main conduit is in communication with a water supply pipe, the other end of the main conduit is in communication with one end of each of the two first branches, the other end of one of the two first branches is in communication with the handheld shower (2), the other end of the other of the two first branches is in communication with inside of the pair of side arms (3), two water conduit branches are provided between two ends of each of the two first branches, one of the two water conduit branches is equipped with a manual pressing valve for turning on and off the one of the two water conduit branches, the other of the two water conduit branches is equipped with a solenoid valve for turning on and off the other of the two water conduit branches, the solenoid valve is connected to a touch switch, and the touch switch is assembled on a pressing panel (4) of the manual pressing valve corresponding to the touch switch.

2. The thermostatically wrapped press-type photosensitive spray shower according to claim 1, wherein
the touch switch is a photosensitive touch switch and comprises a touch screen whose central part is provided with a light transmission area, a photosensitive sensor, and a controller connected with the photosensitive sensor;
wherein, a central part of the pressing panel (4) is provided with an opening, the touch screen is assembled in the opening corresponding to the touch screen, the photosensitive sensor is assembled on an inner side of the pressing panel (4), the light transmission area and the photosensitive sensor are arranged corresponding to a direction along a pressing path of the pressing panel (4), and the controller is connected with the solenoid valve corresponding to the controller.

3. The thermostatically wrapped press-type photosensitive spray shower according to claim 2, wherein an outer surface of the touch screen is recessed inward.

4. The thermostatically wrapped press-type photosensitive spray shower according to claim 1, wherein the water conduit system further comprises a second branch for anti-freezing and draining, wherein, one end of the second branch is in communication with the other end of the main conduit, the other end of the second branch is in communication with a drain-pipe, and the second branch is provided with a manual rotary valve for turning on and off the second branch.

5. The thermostatically wrapped press-type photosensitive spray shower according to claim 1, wherein one end of the water supply pipe is in communication with one end of the main conduit, the other end of the water supply pipe is in communication with a hot water inlet and cold water inlet through a thermostatic cartridge, and the thermostatic cartridge is used for adjusting the amount of hot water and cold water discharged from the hot water inlet and the cold water inlet, mixing the hot water and cold water and transporting the hot water and cold water to the main conduit.

6. The thermostatically wrapped press-type photosensitive spray shower according to claim 1, wherein one end of each of the pair of side arms (3) is rotatably connected with the fixing base (1), and the other end of each of the pair of side arms (3) is inclined and bent toward a side where the spray nozzles (31) are located.

7. The thermostatically wrapped press-type photosensitive spray shower according to claim 1, wherein a spray head is provided inside of each of the spray nozzles (31), a water guide block (311) with a cylindrical structure whose axis extends along a spray path is correspondingly provided inside of an water outlet of the spray head, an outer wall of the water guide block (311) is provided with a spiral groove extending along an axial direction of the water guide block (311), the spiral groove and an inner wall of the spray head form a spiral water outlet channel, a central part of the spiral water outlet channel is provided with a through hole with a cylindrical structure extending along an axis of the spiral water outlet channel, a central part of the through hole is provided with a stopper perpendicular to the axis of the water guide block (311), and a central part of the stopper is provided with a water outlet hole.

8. The thermostatically wrapped press-type photosensitive spray shower according to claim 1, wherein
the spray shower further comprises a seat unit which comprises a back plate (61) fixed on the wall and a folding plate hinged to the back plate (61);
wherein, the back plate (61) is located below the fixing base (1), and the folding plate comprises a first plate body (62) whose one end is hinged to an external surface of the back plate (61), and a second plate body (63) whose one end is hinged to the other end of the first plate body (62);
when the folding plate is opened, the first plate body (62) rotating to a horizontal state relative to the back plate (61), and the second plate body (63) rotating to a vertical state and the bottom of the second plate body (63) is in contact with the ground;
when the folding plate is folded up, both the first plate body (62) and the second plate body (63) rotating to a vertical state relative to the back plate (61), the first plate body (62) and the second plate body (63) overlapping each other, and the first plate body (62) being in close contact with the external surface of the back plate (61).

9. The thermostatically wrapped press-type photosensitive spray shower according to claim 8, wherein two safety handrails (611) are symmetrically provided on both sides of the back plate (61), and each of the two safety handrails (611) is hinged with a side of the back plate (61).

10. The thermostatically wrapped press-type photosensitive spray shower according to claim 9, wherein the external surface of the back plate (61) is provided with a plurality of spherical protrusions at intervals.

## Patentansprüche

1. Thermostatisch gewickelte lichtempfindliche Sprühdusche vom Drucktyp, umfassend eine Befestigungsbasis (1), die an einer Wand angeordnet ist;
eine Handdusche (2), die an der Wand hängt;
ein Paar von Seitenarmen (3), die jeweils auf beiden Seiten der Befestigungsbasis (1) angeordnet sind, wobei ein Ende jedes des Paars von Seitenarmen (3) mit der Befestigungsbasis (1) verbunden ist, eine Endseite des anderen Endes abgedichtet ist;
das Paar von Seitenarmen (3) hohle Strukturen sind und zwei einander gegenüberliegende Seiten des Paars von Seitenarmen (3) mit einer Vielzahl von Sprühdüsen (31) in Intervallen ausgestattet sind;
wobei die Sprühdusche auch Folgendes umfasst:
ein Wasserleitungssystem, das in die Befestigungsbasis (1) integriert ist und eine Hauptleitung und zwei erste Schenkel umfasst;
wobei ein Ende der Hauptleitung mit einem Wasserversorgungsrohr in Kommunikation ist, das andere Ende der Hauptleitung mit einem Ende jedes der zwei ersten Schenkel in Kommunikation ist, das andere Ende eines der zwei ersten Schenkel mit der Handdusche (2) in Kommunikation ist, das andere Ende des anderen der zwei ersten Schenkel mit der Innenseite des Paars von Seitenarmen (3) in Kommunikation ist, zwei Wasserleitungsschenkel zwischen zwei Enden jeder der zwei ersten Schenkel bereitgestellt sind, einer der zwei Wasserleitungsschenkel mit einem manuellen Druckventil ausgestattet ist, um ein Ende der zwei Wasserleitungsschenkel ein- und auszuschalten, das andere der zwei Wasserleitungsschenkel mit einem Magnetventil ausgestattet ist, um das andere Ende der zwei Wasserleitungsschenkel ein- und auszuschalten, das Magnetventil mit einem Berührungsschalter verbunden ist und der Berührungsschalter auf einem Druckpaneel (4) des manuellen Druckventils montiert ist, das dem Berührungsschalter entspricht.

2. Thermostatisch gewickelte lichtempfindliche Sprühdusche vom Drucktyp nach Anspruch 1, wobei der Berührungsschalter ein lichtempfindlicher Berührungsschalter ist und eine Touchscreen umfasst, deren zentraler Teil mit einem Lichtübertragungsbereich, einem lichtempfindlichen Sensor und einer Steuerung ausgestattet ist, die mit dem lichtempfindlichen Sensor verbunden ist,
wobei ein zentraler Teil des Druckpaneels (4) mit einer Öffnung ausgestattet ist, die Touchscreen in der Öffnung, die der Touchscreen entspricht, montiert ist, der lichtempfindliche Sensor auf einer Innenseite des Druckpaneels (4) montiert ist, der Lichtübertragungsbereich und der lichtempfindliche Sensor entsprechend einer Richtung entlang einem Druckweg des Druckpaneele (4) angeordnet sind und die Steuerung mit dem Magnetventil, das der Steuerung entspricht, verbunden ist.

3. Thermostatisch gewickelte lichtempfindliche Sprühdusche vom Drucktyp nach Anspruch 2, wobei eine äußere Fläche der Touchscreen nach innen vertieft ist.

4. Thermostatisch gewickelte lichtempfindliche Sprühdusche vom Drucktyp nach Anspruch 1, wobei das Wasserleitungssystem weiter einen zweiten Schenkel zum Frostschutz und Ablauf umfasst, wobei ein Ende des zweiten Schenkels mit dem anderen Ende der Hauptleitung in Kommunikation ist, das andere Ende des zweiten Schenkels mit einem Ablaufrohr in Kommunikation ist und der zweite Schenkel mit einem manuellen Drehventil ausgestattet ist, um den zweiten Schenkel ein- und auszuschalten.

5. Thermostatisch gewickelte lichtempfindliche Sprühdusche vom Drucktyp nach Anspruch 1, wobei ein Ende des Wasserversorgungsrohrs mit einem Ende der Hauptleitung in Kommunikation ist, das andere Ende des Wasserversorgungsrohrs mit einem Warmwassereinlass und Kaltwassereinlass durch eine thermostatische Patrone in Kommunikation ist und die thermostatische Patrone verwendet wird, um die Menge von Warmwasser und Kaltwasser einzustellen, die vom Warmwassereinlass und Kaltwassereinlass abgegeben wird, das Warmwasser und Kaltwasser zu mischen und das Warmwasser und Kaltwasser in die Hauptleitung zu transportieren.

6. Thermostatisch gewickelte lichtempfindliche Sprühdusche vom Drucktyp nach Anspruch 1, wobei ein Ende jedes Paars von Seitenarmen (3) drehbar mit der Befestigungsbasis (1) verbunden ist und das andere Ende jedes Paars von Seitenarmen (3) geneigt und zu einer Seite gebogen ist, an der sich die Sprühdüsen (31) befinden.

7. Thermostatisch gewickelte lichtempfindliche Sprühdusche vom Drucktyp nach Anspruch 1, wobei ein Sprühkopf innerhalb jeder der Sprühdüsen (31) bereitgestellt ist, ein Wasserführungsblock (311) mit einer zylindrischen Struktur, deren Achse sich entlang einem Sprühweg erstreckt, entsprechend innerhalb eines Wasserauslasses des Sprühkopfs bereitgestellt ist, eine äußere Wand des Wasserführungsblocks (311) mit einer spiralförmigen Nut ausgestattet ist, die sich entlang einer axialen Richtung des Wasserführungsblocks (311) erstreckt, die spiralförmige Nut und eine innere Wand des Sprühkopfs einen spiralförmigen Wasserausgangskanal bilden, ein zentraler Teil des spiralförmigen Wasserausgangskanals mit einem Durchgangsloch mit einer zylindrischen Struktur ausgestattet ist, das sich entlang einer Achse des spiralförmigen Wasserausgangskanals erstreckt, ein zentraler Teil des Durchgangslochs mit einem Stopper senkrecht zur Achse des Wasserführungsblocks (311) ausgestattet ist, und ein zentraler Teil des Stoppers mit einem Wasserausgangsloch ausgestattet ist.

8. Thermostatisch gewickelte lichtempfindliche Sprühdusche vom Drucktyp nach Anspruch 1, wobei die Sprühdusche weiter eine Sitzeinheit umfasst, die eine hintere Platte (61) umfasst, die auf der Wand befestigt ist, und eine Faltplatte, die gelenkig an die hintere Platte (61) verbunden ist,
wobei sich die hintere Platte (61) unter der Befestigungsbasis (1) befindet und die Faltplatte einen ersten Plattenkörper (62) umfasst, dessen eines Ende an eine externe Fläche der hinteren Platte (61) gelenkig verbunden ist, und einen zweiten Plattenkörper (63), dessen eines Ende an das andere Ende des ersten Plattenkörpers (62) gelenkig verbunden ist;
wenn die Faltplatte geöffnet ist, der erste Plattenkörper (62), der sich in einen horizontalen Zustand mit Bezug auf die hintere Platte (61) dreht, und der zweite Plattenkörper (63), der sich in einen vertikalen Zustand dreht, und die Unterseite des zweiten Plattenkörpers (63) in Kontakt mit dem Boden ist;
wobei, wenn die Faltplatte aufgefaltet ist, sowohl der erste Plattenkörper (62) als auch der zweite Plattenkörper (63) sich in einen vertikalen Zustand mit Bezug auf die hintere Platte (61) drehen, wobei der erste Plattenkörper (62) und der zweite Plattenkörper (63) einander überlappen, und wobei der erste Plattenkörper (62) in engem Kontakt mit der externen Fläche der hinteren Platte (61) ist.

9. Thermostatisch gewickelte lichtempfindliche Sprühdusche vom Drucktyp nach Anspruch 8, wobei zwei Sicherheitshandläufe (611) symmetrisch auf beiden Seiten der hinteren Platte (61) bereitgestellt sind und jeder der zwei Sicherheitshandläufe (611) mit einer Seite der hinteren Platte (61) gelenkig verbunden ist.

10. Thermostatisch gewickelte lichtempfindliche Sprühdusche vom Drucktyp nach Anspruch 9, wobei die externe Seite der hinteren Platte (61) mit einer Vielzahl von sphärischen Vorsprüngen in Intervallen ausgestattet ist.

## Revendications

1. Douche à jet photosensible de type à pression à enveloppe thermostatique, comprenant une base de fixation (1) qui est agencée sur une paroi ;
un pommeau de douche (2) qui est accroché à la paroi ; une paire de bras latéraux (3) qui sont respectivement agencés des deux côtés de la base de fixation (1), dans laquelle, une extrémité de chacun de la paire de bras latéraux (3) est raccordée à la base de fixation (1), une face d'extrémité de l'autre extrémité est scellée ;
la paire de bras latéraux (3) sont des structures creuses, et deux côtés opposés de la paire de bras latéraux (3) sont prévus avec une pluralité de buses de pulvérisation (31) à intervalles ;
dans laquelle la douche à jet comprend également :
un système de conduit d'eau qui est intégré dans la base de fixation (1) et comprend un conduit principal et deux premières ramifications ;
dans laquelle, une extrémité du conduit principal est en communication avec un tuyau d'alimentation en eau, l'autre extrémité du conduit principal est en communication avec une extrémité de chacune des deux premières ramifications, l'autre extrémité de l'une des deux premières ramifications est en communication avec le pommeau de douche (2), l'autre extrémité de l'autre des deux premières ramifications est en communication avec l'intérieur de la paire de bras latéraux (3), deux ramifications de conduit d'eau sont prévues entre deux extrémités de chacune des deux premières ramifications, l'une des deux ramifications de conduit d'eau est équipée d'une valve à pression manuelle pour activer et désactiver les deux ramifications de conduit d'eau, l'autre des deux ramifications de conduit d'eau est équipée avec une électrovanne pour activer et désactiver l'autre les deux ramifications de conduit d'eau, l'électrovanne est raccordée à un interrupteur tactile, et l'interrupteur tactile est assemblé sur un panneau de pression (4) de la valve de pression manuelle correspondant à l'interrupteur tactile.

2. Douche à jet photosensible de type à pression à enveloppe thermostatique selon la revendication 1, dans laquelle :
l'interrupteur tactile est un interrupteur tactile photosensible et comprend un écran tactile dont la partie centrale est prévue avec une zone de transmission de lumière, un capteur photosensible et un organe de commande raccordé au capteur photosensible ;
dans laquelle, une partie centrale du panneau de pression (4) est prévue avec une ouverture, l'écran tactile est assemblé dans l'ouverture correspondant à l'écran tactile, le capteur photosensible est assemblé sur un côté interne du panneau de pression (4), la zone de transmission de lumière et le capteur photosensible sont agencés en correspondance d'une direction le long d'une trajectoire de pression du panneau de pression (4), et l'organe de commande est raccordé à l'électrovanne correspondant à l'organe de commande.

3. Douche à jet photosensible de type à pression à enveloppe thermostatique selon la revendication 2, dans laquelle :
une surface externe de l'écran tactile est évidée vers l'intérieur.

4. Douche à jet photosensible de type à pression à enveloppe thermostatique selon la revendication 1, dans laquelle le système de conduit d'eau comprend en outre une seconde ramification pour l'antigel et le drainage, dans laquelle une extrémité de la seconde ramification est en communication avec l'autre extrémité du conduit principal, l'autre extrémité de la seconde ramification est en communication avec un tuyau de drain et la seconde ramification est prévue avec une valve rotative manuelle pour activer et désactiver la seconde ramification.

5. Douche à jet photosensible de type à pression à enveloppe thermostatique selon la revendication 1, dans laquelle une extrémité du tuyau d'alimentation en eau est en communication avec une extrémité du conduit principal, l'autre extrémité du tuyau d'alimentation en eau est en communication avec une entrée d'eau chaude et une entrée d'eau froide par le biais d'une cartouche thermostatique, et la cartouche thermostatique est utilisée pour régler la quantité d'eau chaude et d'eau froide déchargées par l'entrée d'eau chaude et l'entrée d'eau froide, mélanger l'eau chaude et l'eau froide et transporter l'eau chaude et l'eau froide vers le conduit principal.

6. Douche à jet photosensible de type à pression à enveloppe thermostatique selon la revendication 1, dans laquelle une extrémité de chacun de la paire de bras latéraux (3) est raccordée, en rotation, à la base de fixation (1), et l'autre extrémité de chacun de la paire de bras latéraux (3) est inclinée et pliée vers un côté où les buses de pulvérisation (31) sont positionnées.

7. Douche à jet photosensible de type à pression à enveloppe thermostatique selon la revendication 1, dans laquelle une tête de pulvérisation est prévue à l'intérieur de chacune des buses de pulvérisation (31), un bloc de guidage d'eau (311) avec une structure cylindrique dont l'axe s'étend le long d'une trajectoire de pulvérisation est prévu, de manière correspondante, à l'intérieur d'une sortie d'eau de la tête de pulvérisation, une paroi externe du bloc de guidage d'eau (311) est prévue avec une rainure en spirale s'étendant le long d'une direction axiale du bloc de guidage d'eau (311), la rainure en spirale et une paroi interne de la tête de pulvérisation forment un canal de sortie d'eau en spirale, une partie centrale du canal de sortie d'eau en spirale est prévue avec un trou débouchant avec une structure cylindrique s'étendant le long d'un axe du canal de sortie d'eau en spirale, une partie centrale du trou débouchant est prévue avec une butée perpendiculaire à l'axe du bloc de guidage d'eau (311), et une partie centrale de la butée est prévue avec un trou de sortie d'eau.

8. Douche à jet photosensible de type à pression à enveloppe thermostatique selon la revendication 1, dans laquelle la douche à jet comprend en outre une unité de siège qui comprend une plaque arrière (61) fixée sur la paroi et une plaque pliante articulée par rapport à la plaque arrière (61) ;
dans laquelle la plaque arrière (61) est positionnée sous la base de fixation (1), et la plaque pliante comprend un premier corps de plaque (62) dont une extrémité est articulée sur une surface externe de la plaque arrière (61), et un second corps de plaque (63) dont une extrémité est articulée sur l'autre extrémité du premier corps de plaque (62) ;
lorsque la plaque pliante est ouverte, le premier corps de plaque (62) tournant dans un état horizontal par rapport à la plaque arrière (61), et le second corps de plaque (63) tournant dans un état vertical et le fond du second corps de plaque (63) est en contact avec le sol ;
lorsque la plaque pliante est dépliée, à la fois le premier corps de plaque (62) et le second corps de plaque (63) tournant dans un état vertical par rapport à la plaque arrière (61), le premier corps de plaque (62) et le second corps de plaque (63) se chevauchant, et le premier corps de plaque (62) étant en contact immédiat avec la surface externe de la plaque arrière (61) .

9. Douche à jet photosensible de type à pression à enveloppe thermostatique selon la revendication 8, dans laquelle deux rampes de sécurité (611) sont prévues, de manière symétrique, des deux côtés de la plaque arrière (61) et chacune des deux rampes de sécurité (611) est articulée avec un côté de la plaque arrière (61).

10. Douche à jet photosensible de type à pression à enveloppe thermostatique selon la revendication 9, dans laquelle la surface externe de la plaque arrière (61) est prévue avec une pluralité de saillies sphériques à intervalles.
